# EUROPÄISCHE PATENTSCHRIFT

(11) **EP 0 959 273 B1**
(45) Veröffentlichungstag und Bekanntmachung des Hinweises auf die Patenterteilung: **03.09.2003**
(21) Anmeldenummer: 99106295.1
(22) Anmeldetag: 16.04.1999
(51) Int. Cl.: F16J 15/08

(54) **Dichtung, insbesondere für Kraftfahrzeuge**
Gasket, in particular for motor vehicle
Joint d'étanchéité, en particulier pour véhicule automobile

(30) Priorität: 20.05.1998 DE 29809130 U
(43) Veröffentlichungstag der Anmeldung: 24.11.1999
(73) Patentinhaber: ElringKlinger AG, 72581 Dettingen (DE)
(72) Erfinder: Baron, Ralf, 72555 Metzingen (DE)
(74) Vertreter: Hoeger, Stellrecht & Partner

(56) Entgegenhaltungen:
- EP-A- 0 294 084
- US-A- 5 544 902
- US-A- 5 673 920

## Beschreibung

Die Erfindung betrifft eine Dichtung, insbesondere eine Dichtung für eine Kraftfahrzeugkomponente, welche mindestens eine Blechlage aufweist, die wenigstens ein Schraubenloch für den Durchtritt des Gewindeschafts einer Schraube besitzt.

Fahrzeughersteller verlangen in immer größerem Umfang von ihren Zulieferern, daß letztere Bauteile samt zugehörigen Komponenten in vormontiertem Zustand anliefern; aber selbst wenn ein Zulieferer ein Bauteil ohne zugehörige Komponenten liefert, werden die letzteren im Werk des Fahrzeugherstellers oft schon am Bauteil angebracht, ehe dieses zur Montage an das Montageband gebracht wird.

Zu einer Dichtung, insbesondere zu Flachdichtungen, gehören üblicherweise Montageschrauben, und im Zuge der vorstehend beschriebenen Bestrebungen wird gefordert, daß die Dichtung samt Montageschrauben an das Montageband angeliefert wird, wobei die Schrauben verliersicher an der Dichtung gehalten werden sollen.

Verliersicherungen für Schrauben sind in vielfältiger Ausbildung bekannt; so zeigt z. B. das DE-U-87 08 965 eine Kopfschraube mit einer aus einem elastischen Kunststoff hergestellten Unterlage, welche ein Schraubenloch für den Durchtritt des Gewindeschafts der Kopfschraube sowie eine Verliersicherung für die Kopfschraube aufweist, um letztere an der Unterlage zu halten. An den Rand des Schraubenlochs der Kunststoff-Unterlage sind vier Haltezungen einstückig angeformt, welche vor dem Einstecken der Kopfschraube in das Schraubenloch der Unterlage alle in einer den Haltezungen gemeinsamen Ebene liegen, und die Kopfschraube hat zwischen ihrem Kopf und ihrem Gewindeschaft eine Ringnut, in die die Haltezungen eingreifen, nachdem der Gewindeschaft unter elastischer Auslenkung der Haltezungen durch das Schraubenloch der Unterlage hindurchgeschoben wurde.

Aus mindestens einer Blecklage bestehende Dichtungen, die wenigstens ein Schraubenloch für den Dichtritt des gewindeschafts einer Schraube sowie mehrere mit der Blecklage einstückige Haltezungen aufweisen, sind durch die US-A-5,544,902 bekannt.

Moderne Dichtungen für Kraftfahrzeuge haben häufig eine metallische Dichtungsplatte aus einer oder mehreren Blechlagen, welche gegebenenfalls vollflächig oder partiell mit einem meist elastomeren Beschichtungsmaterial beschichtet sind, und der Erfindung lag die Aufgabe zugrunde, für eine Dichtung mit mindestens einer Blechlage eine Verliersicherung für Schrauben zu schaffen, wobei sich die Verliersicherung einfach herstellen lassen und nicht zu Komplikationen bei der Montage führen soll.

Ausgehend von einer Dichtung mit mindestens einer Blechlage, welche wenigstens ein Schraubenloch für den Durchtritt des Gewindeschafts einer Schraube aufweist, wobei vom Rand des Schraubenlochs mehrere mit der Blechlage einstückige Haltezungen abstehen, welche über den Lochumfang verteilt und im Abstand voneinander angeordnet sind, läßt sich diese Aufgabe erfindungsgemäß dadurch lösen, daß die dem Lochzentrum zugewandten Randbereiche der Haltezungen - in Achsrichtung des Schraubenlochs gesehen - ein kreisförmiges Kernloch definieren, dessen Durchmesser dem Kerndurchmesser des Schraubengewindes entspricht, daß die Breite der Haltezungen sowie die Dicke der Blechlage mindestens in den dem Lochzentrum zugewandten Randbereichen der Haltezungen deren Eingriff in das Schraubengewinde ermöglicht, und daß mindestens ein Teil der Haltezungen derart aus der Ebene der Blechlage herausgebogen ist, daß die dem Lochzentrum zugewandten Randbereiche der Haltezungen der Steigung des Schraubengewindes entsprechend in Achsrichtung des Schraubenlochs gegeneinander versetzt angeordnet sind.

Derart gestaltete Haltezungen lassen sich mit einem Stanz-Biege-Werkzeug bei der Herstellung des Schraubenlochs, gegebenenfalls sogar im Zuge des Ausstanzens der Blechlage bei gleichzeitiger Herstellung des Schraubenlochs, sowohl ausstanzen als auch biegen, wobei das Werkzeug ohne weiteres so gestaltet werden kann, daß die Blechlage nach der Durchführung des Stanz-Biege-Vorgangs von selbst aus dem Werkzeug herausfällt. Hat die Blechlage von Hause aus eine Blechstärke, welche es nicht erlauben würde, daß die Haltezungen in das Schraubengewinde eingreifen, kann mit dem Werkzeug die Blechstärke der dem Lochzentrum zugewandten Randbereiche der Haltezungen auch ohne weiteres durch Prägen so verringert werden, daß diese Randbereiche dann in das Schraubengewinde eingreifen können. Im Gegensatz zu einer Verliersicherung, bei der alle Haltezungen bzw. deren dem Lochzentrum zugewandten Randbereiche alle in ein und derselben Ebene liegen, so daß ohne eine Verformung der Haltezungen beim Einbringen der Schraube in das Schraubenloch nur eine der Haltezungen in das Schraubengewinde eingreifen kann, ermöglicht es die erfindungsgemäße Verliersicherung, daß alle Haltezungen in das Schraubengewinde eingreifen können, dadurch die Schraube wirklich verliersicher an der Dichtung gehalten wird, und zwar mit einem Verlauf der Schraubenachse senkrecht zur Ebene der Blechlage, und daß sich die Schraube im Schraubenloch zentriert - dies stellt für die spätere Montage einen ganz erheblichen Vorteil dar. Außerdem führt die erfindungsgemäße Verliersicherung noch zu den folgenden weiteren Vorteilen: Wird die Schraube während des Einbringens in die Dichtung gedreht, ist keinerlei Kraftaufwand erforderlich; die elastisch auslenkbaren Haltezungen lassen es aber auch zu, daß die Schraube, ohne sie zu drehen, einfach in das Schraubenloch eingesteckt wird, während ein Zurückschieben der Schraube nicht oder nur mit einem relativ hohen Kraftaufwand möglich ist.

Grundsätzlich wäre es möglich, die aus der Ebene der Blechlage herauszubiegende Haltezunge bzw. die herauszubiegenden Haltezungen so zu biegen, daß sie schräg zur Ebene der Blechlage verläuft bzw. verlaufen. Bevorzugt werden jedoch Ausführungsformen, bei denen jede aus der Ebene der Blechlage herausgebogene Haltezunge sowohl im Bereich ihrer Wurzel als auch nahe ihrem dem Lochzentrum zugewandten Randbereich derart abgewinkelt ist, daß der letztere mindestens ungefähr parallel zur Ebene der Blechlage verläuft, denn dann stehen die zentrumsnahen Randbereiche aller Haltezungen senkrecht im Schraubengewinde.

Von besonders einfacher Gestaltung wird die erfindungsgemäße Verliersicherung dann, wenn eine der Haltezungen eben ist und in der Ebene der Blechlage liegt, da dann nur die zweite bzw. alle anderen Haltezungen aus der Blechlage herausgebogen werden muß bzw. müssen.

Eine besonders wirksame Verliersicherung und eine besonders gute Zentrierung der Schraube ergibt sich dann, wenn die dem Lochzentrum zugewandten Randbereiche der Haltezungen eine dem Kernloch entsprechende kreisbogenförmige Kontur aufweisen, obwohl natürlich auch Ausführungsformen denkbar sind, bei denen die dem Lochzentrum zugewandten Randbereiche der Haltezungen z. B. eine dreiecksförmige oder konvex halbkreisförmige Kontur besitzen.

Damit die Haltezungen gut in das Schraubengewinde eingreifen können, ohne daß sie beim Einbringen der Schraube in das Schraubenloch verformt werden müssen, sollten die dem Lochzentrum zugewandten Randbereiche der Haltezungen verhältnismäßig schmal sein, weshalb im Hinblick auf die erwünschte Zentrierung der Schraube im Schraubenloch Ausführungsformen mit mehr als zwei Haltezungen bevorzugt werden, insbesondere Ausführungsformen mit drei in gleichen Winkelabständen voneinander angeordneten Haltezungen.

Schließlich wird empfohlen, die erfindungsgemäße Verliersicherung so zu gestalten, daß die aus der Ebene der Blechlage herausgebogene bzw. herausgebogenen Haltezunge bzw. Haltezungen in Montagerichtung der Schraube von der Blechlage absteht bzw. abstehen, da dann kein allzu hoher Kraftaufwand erforderlich ist, um die Schraube, ohne sie zu drehen, in das Schraubenloch einstecken zu können, und zwar in der Richtung, in der die Haltezungen aus der Blechlage herausgebogen wurden.

Weitere Merkmale, Vorteile und Einzelheiten der Erfindung ergeben sich aus der beigefügten zeichnerischen Darstellung und der nachfolgenden Beschreibung einer besonders vorteilhaften Ausführungsform der erfindungsgemäßen Verliersicherung einer Dichtung; in der Zeichnung zeigen:
- Fig. 1: eine Draufsicht auf einen Teil einer erfindungsgemäßen Dichtung mit mehreren Schraubenlöchern, von denen drei mit einer erfindungsgemäßen Verliersicherung versehen sind;
- Fig. 2: den Ausschnitt A aus Fig. 1 in größerem Maßstab;
- Fig. 3: einen Schnitt nach der Linie 3-3 in Fig. 2 und
- Fig. 4: die Abwicklung des in Fig. 3 dargestellten Schnitts.

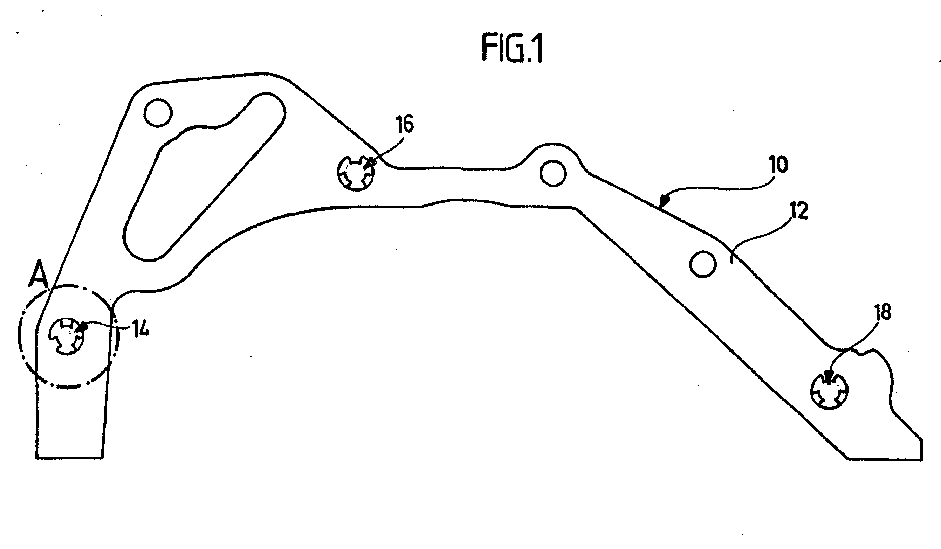

Die Fig. 1 zeigt einen Teil einer Dichtung 10, deren Dichtungsplatte 12 von einer einzigen Blechlage gebildet wird, welche ein- oder beidseitig vollflächig oder partiell mit einer insbesondere elastomeren Dichtungsmasse beschichtet sein kann.

In dem in Fig. 1 dargestellten Teil der Dichtung 10 besitzt die Dichtungsplatte 12 drei mit erfindungsgemäßen Verliersicherungen versehene Schraubenlöcher 14, 16, 18 für den Durchtritt der Gewindeschäfte von nicht dargestellten Kopfschrauben.

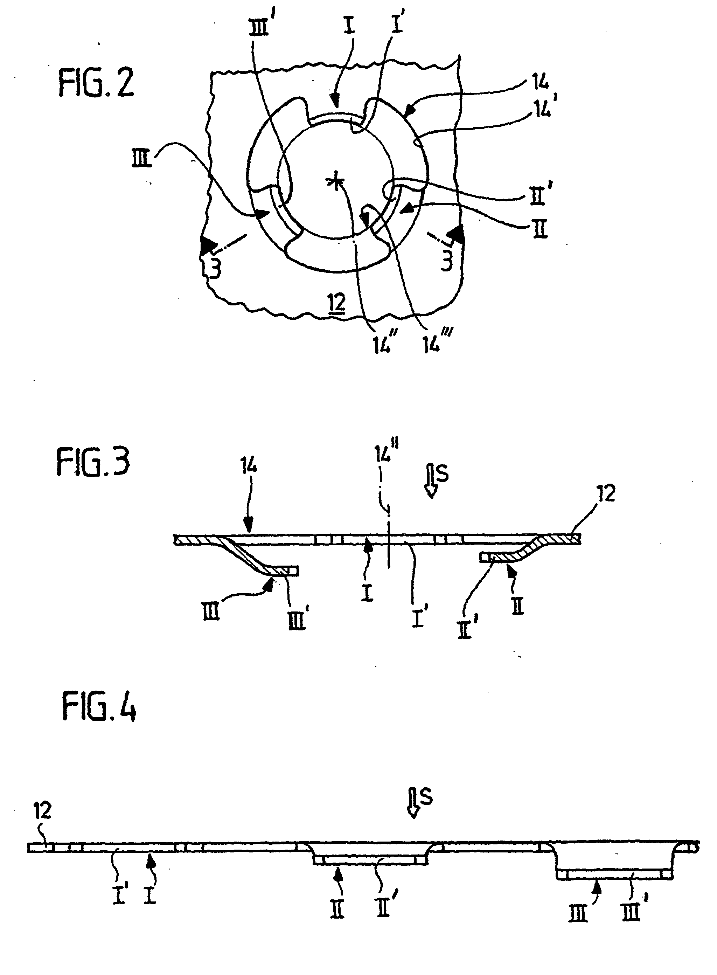

Die Schraubenlöcher können alle identisch ausgebildet sein, und anhand der Figuren 2 bis 4 soll nun die Gestaltung der am Schraubenloch 14 vorgesehenen Verliersicherung näher beschrieben werden.

Das Schraubenloch 14 hat einen von mehreren Kreisbogensegmenten gebildeten Rand 14', welcher einen Kreis mit einem Durchmesser definiert, der gleich dem Durchmesser herkömmlich gestalteter Schraubenlöcher in Dichtungsplatten ist. Vom Schraubenlochrand 14' stehen nach innen, d. h. in Richtung auf ein Lochzentrum 14", drei Haltezungen I, II und III ab, welche in gleichen Winkelabständen voneinander angeordnet sind und vom Blech der Dichtungsplatte 12 gebildet werden. Dem Lochzentrum 14" zugewandte innere Randbereiche der Haltezungen I bis III wurden mit I', II' und III' bezeichnet; die dem Lochzentrum 14" zugewandten Kanten dieser inneren Randbereiche sind gleichfalls kreisbogenförmig und definieren ein kreisförmiges, zum Lochzentrum 14" konzentrisches Kernloch 14''', dessen Durchmesser nur ganz geringfügig größer ist als der Kerndurchmesser des Gewindes der zu haltenden Kopfschraube.

Wie die Figuren 3 und 4 erkennen lassen, ist die Haltezunge I eben und liegt in der Ebene der Dichtungsplatte, wohingegen die Haltezungen II und III aus der Dichtungsplattenebene herausgebogen wurden, und zwar in Richtung des in Fig. 3 eingezeichneten Pfeils S, der auch die Richtung angibt, in der die zu haltende Kopfschraube in das Schraubenloch 14 einzustecken ist.

Jede der Haltezungen II und III ist sowohl im Bereich ihrer Wurzel als auch am radial äußeren Ende ihres inneren Randbereichs II' bzw. III' jeweils stumpfwinklig so abgebogen, daß sich ein Querschnitt in Gestalt eines etwas flachgezogenen Z ergibt. Die inneren Randbereiche II' und III' verlaufen parallel zur Ebene der Dichtungsplatte 12, jedoch in derart unterschiedlichen Abständen von der eigentlichen Dichtungsplatte (in Richtung des Pfeils S gemessen), daß die inneren Randbereiche I', II' und III' (unter Beachtung ihrer Winkelabstände voneinander) der Steigung des Schraubengewindes entsprechend in Richtung des Pfeils S gegeneinander versetzt angeordnet sind.

Die in Umfangsrichtung des Schraubenlochs 14 gemessene Breite der Haltezungen I bis III wurde unter Berücksichtigung der Blechstärke der Dichtungsplatte 12 so gewählt, daß die inneren Randbereiche I', II' und III' so in den Gewindegang bzw. die Gewindegänge der zu haltenden Schraube eingreifen können, daß dabei zumindest keine nennenswerte Verformung der Haltezungen I bis III eintritt.

Wird eine Schraube in Richtung des Pfeils S in das Schraubenloch 14 eingeführt und dabei nicht gedreht, werden die Haltezungen I, II und III in Richtung des Pfeils S elastisch ausgelenkt und springen dann in den Gewindegang bzw. in die Gewindegänge zurück. Da die Haltezungen II und III schräg von der eigentlichen Dichtungsplatte 12 abstehen und beide in Richtung des Pfeils S aus der Ebene der Dichtungsplatte herausgebogen wurden, läßt sich die Schraube jedoch aus dem Schraubenloch 14 nicht mehr oder nur unter großem Kraftaufwand herausziehen bzw. entgegen dem Pfeil S zurückdrücken.

Vor allem dann, wenn die Haltezungen I, II, III so gestaltet sind, daß sie nicht nur über einen sehr kleinen Umfangswinkel in das Schraubengewinde eingreifen, kann eine Abwandlung der zeichnerisch dargestellten Ausführungsform der erfindungsgemäßen Verliersicherung empfehlenswert sein; bei dieser Abwandlung verlaufen die dem Lochzentrum 14" zugewandten Randbereiche I', II' und III' der Haltezungen nicht parallel zur Ebene der Blechlage 12, wie dies in den Figuren 3 und 4 dargestellt ist, sondern sind gegen diese Ebene der Steigung des Schraubengewindes entsprechend geneigt. Dadurch kann vermieden werden, daß die erfindungsgemäße Verliersicherung beim Montieren der Dichtung, d. h. beim Anziehen der Schrauben, zu einer Erhöhung des hierfür erforderlichen Drehmoments führt, weil sich die in das Schraubengewinde eingreifenden Haltezungen an die Flanken des Gewindes anschmiegen. Außerdem lassen sich Haltezungen mit derart geneigt verlaufenden Randbereichen gleichfalls ohne weiteres mittels eines Stanz-Biege-Werkzeugs herstellen.

## Patentansprüche

1. Dichtung mit mindestens einer Blechlage, welche wenigstens ein Schraubenloch für den Durchtritt des Gewindeschafts einer Schraube aufweist, wobei vom Rand (14') des Schraubenlochs (14) mehrere mit der Blechlage (12) einstückige Haltezungen (I, II, III) abstehen, welche über den Lochumfang verteilt und im Abstand voneinander angeordnet sind, **dadurch gekennzeichnet, daß** die dem Lochzentrum (14") zugewandten Randbereiche (I', II', III') der Haltezungen - in Achsrichtung (S) des Schraubenlochs (14) gesehen - ein kreisförmiges Kernloch (14''') definieren, dessen Durchmesser dem Kerndurchmesser des Schraubengewindes entspricht, daß die Breite der Haltezungen sowie die Dicke der Blechlage mindestens in den dem Lochzentrum zugewandten Randbereichen (I', II', III') der Haltezungen deren Eingriff in das Schraubengewinde ermöglichen, und daß mindestens ein Teil (II, III) der Haltezungen derart aus der Ebene der Blechlage (12) herausgebogen ist, daß die dem Lochzentrum (14") zugewandten Randbereiche (I', II', III') der Haltezungen der Steigung des Schraubengewindes entsprechend in Achsrichtung (S) des Schraubenlochs (14) gegeneinander versetzt angeordnet sind.

2. Dichtung nach Anspruch 1, **dadurch gekennzeichnet, daß** jede aus der Ebene der Blechlage herausgebogene Haltezunge (II, III) sowohl im Bereich ihrer Wurzel als auch nahe ihrem dem Lochzentrum (14") zugewandten Randbereich (II', III') derart abgewinkelt ist, daß der letztere mindestens ungefähr parallel zur Ebene der Blechlage (12) verläuft.

3. Dichtung nach Anspruch 1 oder 2, **dadurch gekennzeichnet, daß** eine der Haltezungen (I) eben ist und in der Ebene der Blechlage (12) liegt.

4. Dichtung nach einem oder mehreren der Ansprüche 1 bis 3, **dadurch gekennzeichnet, daß** die dem Lochzentrum (14") zugewandten Randbereiche (I', II', III') der Haltezungen eine dem Kernloch (14''') entsprechende kreisbogenförmige Kontur aufweisen.

5. Dichtung nach einem oder mehreren der Ansprüche 1 bis 4, **dadurch gekennzeichnet, daß** die Haltezungen (I, II, III) in gleichen Winkelabständen voneinander angeordnet sind.

6. Dichtung nach einem oder mehreren der Ansprüche 1 bis 5, **dadurch gekennzeichnet, daß** drei Haltezungen vorgesehen sind.

7. Dichtung nach einem oder mehreren der Ansprüche 1 bis 6, **dadurch gekennzeichnet, daß** die aus der Ebene der Blechlage (12) herausgebogene Haltezunge (II bzw. III) bzw. herausgebogenen Haltezungen (II, III) in Montagerichtung (S) der Schraube von der Blechlage (12) absteht bzw. abstehen.

8. Dichtung nach einem oder mehreren der Ansprüche 1 bis 7, **dadurch gekennzeichnet, daß** die dem Lochzentrum (14") zugewandten Randbereiche (I', II', III') der Haltezungen der Steigung des Schraubengewindes entsprechend gegen die Ebene der Blechlage (12) geneigt sind.

## Claims

1. Gasket with at least one sheet-metal layer having at least one screw hole for the passage of the threaded shaft of a screw, with several holding tongues (I, II, III) integral with the sheet-metal layer (12) projecting from the edge (14') of the screw hole (14) and being distributed over the hole circumference and arranged at a distance from one another, **characterized in that** the edge regions (I', II', III') of the holding tongues facing the centre (14") of the hole - when seen in axial direction (S) of the screw hole (14) - define a circular core hole (14"') having a diameter corresponding to the core diameter of the screw thread, that the width of the holding tongues as well as the thickness of the sheet-metal layer enable at least the edge regions (I', II', III') of the holding tongues facing the centre of the hole to engage in the screw thread, and that at least some (II, III) of the holding tongues are bent out of the plane of the sheet-metal layer (12) in such a manner that the edge regions (I', II', III') of the holding tongues facing the centre (14") of the hole are arranged so as to be offset in relation to one another in axial direction (S) of the screw hole (14) in accordance with the pitch of the screw thread.

2. Gasket as defined in claim 1, **characterized in that** each holding tongue (II, III) bent out of the plane of the sheet-metal layer is bent at an angle both in the area of its base and close to its edge region (II', III') facing the centre (14") of the hole in such a manner that the edge region extends at least approximately parallel to the plane of the sheet-metal layer (12).

3. Gasket as defined in claim 1 or 2, **characterized in that** one of the holding tongues (I) is flat and located in the plane of the sheet-metal layer (12).

4. Gasket as defined in any or several of claims 1 to 3, **characterized in that** the edge regions (I', II', III') of the holding tongues facing the centre (14") of the hole have a contour in the shape of a circular arc corresponding to the core hole (14"').

5. Gasket as defined in any or several of claims 1 to 4, **characterized in that** the holding tongues (I, II, III) are arranged at equal angular distances from one another.

6. Gasket as defined in any or several of claims 1 to 5, **characterized in that** three holding tongues are provided.

7. Gasket as defined in any or several of claims 1 to 6, **characterized in that** the holding tongue (II or III) or holding tongues (II, III) bent out of the plane of the sheet-metal layer (12) projects or project from the sheet-metal layer (12) in assembly direction (S) of the screw.

8. Gasket as defined in any or several of claims 1 to 7, **characterized in that** the edge regions (I', II', III') of the holding tongues facing the centre (14") of the hole are inclined towards the plane of the sheet-metal layer (12) in accordance with the pitch of the screw thread.

## Revendications

1. Joint d'étanchéité comprenant au moins une feuille de tôle qui présente au moins un trou de vis pour le passage de la tige filetée d'une vis, où plusieurs languettes de retenue (I, II, III), formant une seule pièce avec la feuille de tôle (12), sont en saillie par rapport au bord (14') du trou de vis (14), lesquelles languettes de retenue sont réparties sur la circonférence du trou et disposées en étant espacées les unes des autres,
**caractérisé**
**en ce que** les zones de bordures (I', II', III') des languettes de retenue, tournées vers le centre du trou (14") et vues dans la direction axiale (S) du trou de vis (14), définissent un trou intérieur (14''') de forme circulaire dont le diamètre correspond au diamètre intérieur du filetage de la vis,
**en ce que** la largeur des languettes de retenue ainsi que l'épaisseur de la feuille de tôle permettent, au moins dans les zones de bordures (I', II', III') des languettes de retenue, tournées vers le centre du trou, leur engagement dans le filetage de la vis, et
**en ce qu'**au moins une partie (II, III) des languettes de retenue est recourbée en dehors du plan de la feuille de tôle (12), de manière telle que les zones de bordures (I', II', III') des languettes de retenue, tournées vers le centre du trou (14"), correspondant au pas de filetage de la vis, dans la direction axiale (S) du trou de vis (14), sont disposées en étant décalées les unes par rapport aux autres.

2. Joint d'étanchéité selon la revendication 1, **caractérisé en ce que** chacune des languettes de retenue (II, III), recourbée en dehors du plan de la feuille de tôle, est coudée aussi bien dans la zone de sa partie initiale qu'à proximité de sa zone de bordure tournée vers le centre du trou (14"), de manière telle que cette dernière zone de bordure s'étend au moins de façon à peu près parallèle au plan de la feuille de tôle (12).

3. Joint d'étanchéité selon la revendication 1 ou 2, **caractérisé en ce que** l'une des languettes de retenue (I) est plane et se trouve dans le plan de la feuille de tôle (12).

4. Joint d'étanchéité selon l'une ou plusieurs des revendications 1 à 3, **caractérisé en ce que** les zones de bordures (I', II', III') des languettes de retenue, tournées vers le centre du trou (14"), présentent un contour en forme d'arc de cercle correspondant au trou intérieur (14''').

5. Joint d'étanchéité selon l'une ou plusieurs des revendications 1 à 4, **caractérisé en ce que** les languettes de retenue (I, II, III) sont disposées les unes par rapport aux autres, suivant des distances angulaires identiques.

6. Joint d'étanchéité selon l'une ou plusieurs des revendications 1 à 5, **caractérisé en ce que** trois languettes de retenue sont prévues.

7. Joint d'étanchéité selon l'une ou plusieurs des revendications 1 à 6, **caractérisé en ce que** la languette de retenue (II ou III) ou les languettes de retenue (II, III) recourbée(s) en dehors du plan de la feuille de tôle (12), dans le sens de montage (S) de la vis, est ou sont en saillie par rapport à la feuille de tôle (12).

8. Joint d'étanchéité selon l'une ou plusieurs des revendications 1 à 7, **caractérisé en ce que** les zones de bordures (I', II', III') des languettes de retenue, tournées vers le centre du trou (14"), correspondant au pas du filetage de vis, sont inclinées en direction du plan de la feuille de tôle (12).
